# EUROPEAN PATENT APPLICATION

(11) **EP 4 550 005 A1**
(43) Date of publication of application: **07.05.2025**
(21) Application number: 24461608.2
(22) Date of filing: 02.08.2024
(51) Int. Cl.: G01V 1/00

(54) **SYSTEM AND METHOD FOR EARTHQUAKE PREDICTIONS AND FORECASTS**

(30) Priority: 01.11.2023 US 202363595258 P
(71) Applicant: Astrotectonic Sp. z o.o., 35-069 Rzeszow (PL)
(72) Inventor: Zabari, Noemi, 32-087 Zielonki (PL); Cheminant, Kevin, 31-465 Krakow (PL); Zabari, Itamar, 32-087 Zielonki (PL)
(74) Representative: AOMB Polska Sp. z.o.o.

(57) **Abstract**

The subject matter of the invention is a system for earthquake predictions and forecasts. The system comprises a data collection module (1), where the data collection module (1) contains at least one data channel (2). The system comprises further an integrated AI and forecast module (3), where the integrated AI and forecast module (3) contains at least one autoencoder (4) and a predictor (5). The second subject matter of the invention is a method for earthquake predictions and forecasts, which is conducted in the system according to the invention.

## Description

### Technical field

The subject matter of the present invention is a system for earthquake predictions and forecasts and a method for earthquake predictions and forecasts utilizing the system according to the invention. This invention relates to the field of systems, methods and algorithms utilized for earthquake predictions and forecasts. These kind of systems and methods could be used in different application related to ensuring of public safety.

### Background art

Forecasts and predictions of earthquakes, especially but not limited to earthquakes forecasting horizons of 14 days, 5 days, 3 days and 1 day, as well as in n days or within a time of hours, are of great importance for a safety purposes, especially for people live in areas at risk of earthquakes, those kind of forecasts will also provide crucial time frame to shutdown heavy industries, transportations, as well as gas, oil, chemical infrastructure, and nuclear powerplants. Therefore in state-of-the-art there are known several systems and methods for earthquake predictions, which are summarized below.

From the US patent US 7277797 B1 an apparatus is known which is intended to predict the onset of earthquakes, one to three days prior to the event. The apparatus predicts latitude, longitude, and time of occurrence of an incipient earthquake, by monitoring and exploiting unique changes in the ionosphere and atmosphere. Exploited signals and data could be radio-tomography of the ionosphere, data from satellite transmitters, data from ground-based radars that display unique clutter maps during earthquake pre-cursor activity, data from cellular telephone networks that display signal fading, gravity waves, internal gravity waves, solitions, solitary waves, total electron content, man-made and natural noise sources, magnetospheric influences, archival records, seasonal effects, phase, amplitude, and frequency fluctuations in the ionosphere, perturbations in the atmosphere, and the time-values of the above parameters, since they change rapidly. In some embodiments, the apparatus uses cellular telephone signal fading, radar, and satellite transmissions through the ionosphere to provide time, position, and magnitude of impending earthquakes.

From the US patent application US 20220196860 A1 a method and system are known, to recognize abnormal shaking over multiple cameras that interface with the cloud during an earthquake. The system determines whether a shaking identified in the processed input is above a predetermined threshold based on the processed input, thereby detecting one or more anomalies. The system infers at least one of a location, magnitude, or depth of an earthquake based on the shaking identified in the processed input. The system and method utilize an artificial intelligence (AI) model trained to detect parameters of an earthquake based on the visual input from the plurality of cameras, wherein the trained AI model is applied to visual input from a different set of a plurality of cameras at a separate location.

From the patent application TW 200847073 A an earthquake warning system is known, which comprises a plurality of first detecting apparatuses for continuously sensing the generation of a seismic wave, a processing apparatus, a first communicating apparatus, and a second communicating apparatus and a second detecting apparatus for measuring a movement level of a target and generating a second signal based on the movement level, wherein the processing apparatus is configured for receiving the first signals and the second signal, and generating a warning signal according to a criterion. The system can accurately judge the possibility of earthquake information reducing misjudgment. Moreover, the earthquake warning system of the present invention also includes multiple (five) communication devices for the purpose of quickly and safely issuing an earthquake alarm.

From scientific paper "Earthquakes magnitude predication using artificial neural network in northern Red Sea area" [Abdulrahman S.N. Alarifi, Nassir S.N. Alarifi, SaadAl-Humidan, Journal of King Saud University - Science, Volume 24, Issue 4, October 2012, Pages 301-313*]* an application of artificial intelligent prediction system based on artificial neural network to predicate the magnitude of future earthquakes is known. The earthquakes are predicted based on feed forward neural network model with multi-hidden layers. The system is configured for data acquisition, pre-processing, feature extraction, and neural network training and testing. The system analyzes data such as radon concentration, ionospheric disturbances, etc. to predict future earthquakes.

### Technical problem - a purpose of the invention

Systems and methods for earthquake predictions and forecasts known in state-of-the-art are based on different operating principles. Few of them use different types of input signals. There are methods known in state-of-the-art based on utilization of artificial intelligence (AI) and machine learning (ML) algorithms. However, no system or method is known in state-of-the-art, which allows not only for effective prediction and forecasts of the earthquake events, but simultaneously gives quantified data using probabilities. Moreover, just a general architecture of AI systems is known in state-of-the-art, without focus on which type of AI algorithms should be used and which way they should be connected between each other. The purpose of the invention is to provide a system and method that not only effectively predicts and forecasts earthquake events but also provides quantified data using probabilities, and specifies the type of AI algorithms to be used and how they should be interconnected.

### Summary of the invention

According to one aspect of the present invention, there is provided a system for earthquake predictions and forecasts characterized in that the system comprises a data collection module, where the data collection module contains at least one data channel, and the system comprises further an integrated AI and forecast module, where the integrated AI and forecast module contains at least one autoencoder and a predictor, while the number of the autoencoders corresponds to the number of the data channels and each data channel is connected with one autoencoder and each autoencoder has a channel-specific architecture, wherein the data collection module is configured to collect at least one type of data in the at least one data channel and the integrated AI and forecast module is configured to process and analyze data from the at least one data channel to predict or forecast seismic activities.

Preferably, the data collection module contains a data preprocessing module, and the data preprocessing module is configured to preprocess data using channel-specific methods well-known in state-of-the-art.

Preferably, the integrated AI and forecast module contains a parameter sweeper, and the parameter sweeper is placed on the input to the predictor, and the parameter sweeper is configured to generate at least one additional parameter set.

According to another aspect of the present invention, there is provided a method for earthquake predictions and forecasts characterized in that the method is conducted in the system according to the invention, wherein the method is divided into two main modes - a training mode and a working mode, wherein in the training mode one collects at least one type of historical input data of any type useful for earthquake prediction known in state-of-the-art, for a particular location and for a particular time period, in which time period, at least one earthquake event took place, using the at least one data channel in the data collection module, and next one transfers the collected historical data set into the integrated AI and forecast module and trains the integrated AI and forecast module based on the collected historical data set, using training methods known in state-of-the-art, creating a trained model for the particular location, in particular one trains separate autoencoder for each data channel to extract crucial information from the input data and detect anomalies, then trains a predictor using both output of the encoder part of the autoencoder (known as compressed representation) and anomaly-related features based on the autoencoder's individual reconstruction errors (interpreted as anomaly scores) as inputs to the model, and thanks to the combination of these three activities one creates a unique feature vector for each timestamp and in the last step one defines an earthquake detection task, which is a classification task of type well-known in state-of-the-art, wherein in the working mode, one collects at least one type of input data of any type useful for earthquake prediction known in state-of-the-art (the same type, which was used for training of the trained model for particular location) and then one transfers the data into the trained integrated AI and forecast module, process data using the trained integrated AI and forecast module and one predicts or forecasts earthquake event in the defined time period using predictor and the defined earthquake detection task, while separate models are trained and used for different geographic location.

Preferably, one selects input data arbitrarily from the data types set:
- Cosmic Ray Data,
- Ground Deformation Data,
- Thermal Imaging Data,
- Ionospheric Disturbances,
- Radon Concentration,
- Gravity Data,
- Atmospheric Pressure Variations,
- Seismic Activity Data,
- Total Electron Content (TEC),
- Solar Activity Data.

Preferably, one uses each data channel separately.

Other benefits are obtain, when one combines multiple data channels.

Examples of the individual reconstruction errors regarding in the training mode are single pixel in an image or a single numerical value in a time series.

In some execution examples, the timestamp in the training mode represents a time of an image acquisition or a last time value in a time series input.

Preferably, in the training mode or in the working mode one preprocesses the data with channel-specific methods known in state-of-the-art using the data preprocessing module, where examples of methods are division by moving average, standard scaling or removing extreme outliers.

Other benefits are obtained when one generates numerous parameter sets using the parameter sweeper and uses these parameter sets as additional input for the predictor.

Further benefits are obtained, when one combines per-channel probability scores into a single probability score using a weighted geometric mean method.

Preferably, one calibrates the integrated AI and forecast module in the working mode in order to transform probability scores into precise likelihood estimations by aligning the probability score with the actual proportion of positive labels using methods well-known in the state-of-the-art.

Further benefits are obtained, when one defines the earthquake detection task as a binary classification task, in which a binary label answers the question, "Will an earthquake of magnitude within range (Mmin, Mmax) occur in area A within the next N days/in N days?"

### Advantages of the invention - technical effect

The integrated AI-based system and method for earthquake predictions and forecasts offers significant advancements over methods known in state-of-the-art, by combining diverse data channels and employing sophisticated AI models. The system and method according to the invention improve the accuracy of seismic event predictions and provide quantified data using probabilities, enabling timely and effective responses to potential earthquake threats. By integrating the forecasting capabilities directly within the AI module, the system streamlines the prediction process, allowing for real-time analysis and improved responsiveness. The use of multiple data channels enriches the model's input, leading to more accurate and nuanced predictions. The absence of a separate alert module simplifies the system architecture while maintaining effectiveness. The system and method, according to the invention, allows not only for effective prediction and forecasts of earthquake events but simultaneously gives quantified data using probabilities. The innovative integration of various data sources, such as cosmic ray data, ground deformation data, and ionospheric disturbances, along with the advanced AI processing capabilities, positions this system and method as a vital tool for enhancing public safety and mitigating the impact of earthquakes. The streamlined architecture, which eliminates the need for a separate alert module, further simplifies the system while maintaining high efficiency and reliability in earthquake forecasting. Thanks to the usage of data preprocessing the training process is expedite and simplify. Thanks to the usage of parameter sweeper, the model is more versatile, capable of making inferences on a variety of prediction parameters (such as minimal and maximal magnitude, area A, and a forecast horizon of N days or a forecast of an event(s) in N days). This will also increase the dataset size and the number of evaluated earthquakes, thereby making the performance more reliable.

### Brief description of Drawings

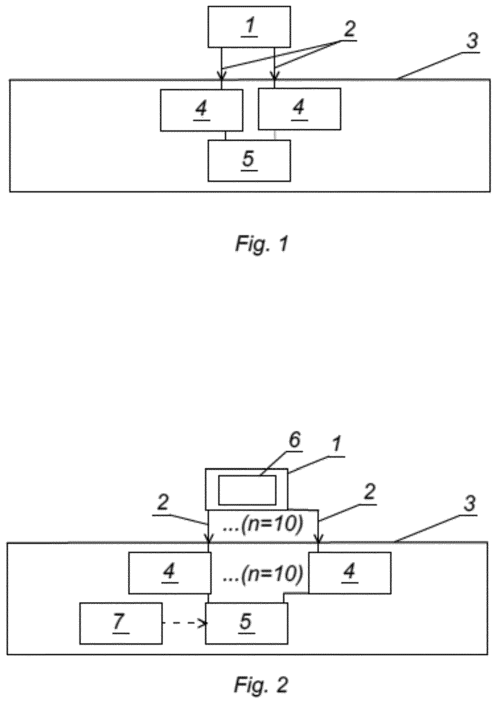

A system for earthquake predictions and forecasts according to the invention is illustrated in the drawings, where Fig. 1 presents a functional scheme of the system according to a first embodiment, and Fig. 2 presents a functional scheme of the system according to a second embodiment.

### Detailed description of preferred embodiments

According to the invention in the first embodiment, a system for earthquake predictions and forecasts comprises a data collection module 1. The data collection module 1 contains two data channels 2. The system comprises further an integrated AI and forecast module 3. The integrated AI and forecast module 3 contains two autoencoders 4 and a predictor 5. The number of the autoencoders 4 corresponds to the number of the data channels 2 and each data channel 2 is connected with one autoencoder 4, and each autoencoder 4 has a channel-specific architecture. The data collection module 1 is configured to collect two types of data in the two data channels 2. The integrated AI and forecast module 3 is configured to process and analyze data from the two data channels 2 to predict and forecast seismic activities.

According to the invention in the second embodiment, a system for earthquake predictions and forecasts comprises a data collection module 1. The data collection module 1 contains ten data channels 2 and a data preprocessing module 6. The data preprocessing module 6 is configured to preprocess data using division by moving average. The system comprises further an integrated AI and forecast module 3. The integrated AI and forecast module 3 contains ten autoencoders 4, a predictor 5, and a parameter sweeper 7. The number of the autoencoders 4 corresponds to the number of the data channels 2 and each data channel 2 is connected with one autoencoder 4 and each autoencoder 4 has a channel-specific architecture. The parameter sweeper 7 is placed on the input to the predictor 5 and the parameter sweeper 7 is configured to generate one additional parameter set. The data collection module 1 is configured to collect ten type of data in ten data channels 2. The integrated AI and forecast module 3 is configured to process and analyze data from the ten data channels 2 to predict and forecast seismic activities.

A method for earthquake predictions and forecasts according to the invention in a first execution example is conducted in the system according to the invention in the first embodiment described above. The method is divided into two main modes - a training mode and a working mode. In the training mode, one collects historical input data of Cosmic Ray Data type and Ground Deformation Data type useful for earthquake prediction, for a particular location and for a particular time period, in which time period, at least one earthquake event took place, using the two data channels 2 in the data collection module 1. Next, one transfers the collected historical data set into the integrated AI and forecast module 3 and trains the integrated AI and forecast module 3 based on the collected historical data set, using an unsupervised training method, creating a trained model for the particular location. In particular, one trains separate autoencoder 4 for each data channel 2 to extract crucial information from the input data and detect anomalies, then trains a predictor 5 using both output of the encoder part of the autoencoders 4 (known as compressed representation) and anomaly-related features based on the autoencoders' 4 individual reconstruction errors (interpreted as anomaly scores) as inputs to the model. Thanks to the combination of these three activities one creates a unique feature vector for each timestamp. In the last step, one defines an earthquake detection task, which is a binary classification task. In the working mode, one collects input data of Cosmic Ray Data type and Ground Deformation Data type useful for earthquake (the same types, which were used for training the trained model for the particular location). Then, one transfers the data into the trained integrated AI and forecast module 3, processes data using the trained integrated AI and forecast module 3, and predicts or forecasts earthquake events in the defined time period using predictor 5 and the defined earthquake detection task. The separate models are trained and used for different geographic location. In the first execution example of the method according to the invention one uses each data channel 2 separately.

A method for earthquake predictions and forecasts according to the invention in a second execution example is conducted in the system according to the invention in the second embodiment described above. The method is divided into two main modes - a training mode and a working mode. In the training mode one collects historical input data of Cosmic Ray Data type, Ground Deformation Data type, Thermal Imaging Data type, Ionospheric Disturbances data type, Radon Concentration data type, Gravity Data type, Atmospheric Pressure Variations data type, Seismic Activity Data type, Total Electron Content (TEC) data type, Solar Activity Data type, which are useful for earthquake prediction, for a particular location and for a particular time period, in which time period, at least one earthquake event took place, using the ten data channels 2 in the data collection module 1. The exemplary source of data could be as follows:
- Cosmic Ray Data - publicly available cosmic-ray databases such as the Neutron Monitor Database (NMDB), solar activity data were taken from the Solar Influences Data Analysis Center (SIDC), geomagnetic conditions. Cosmic ray data could be also taken from a dedicated cosmic ray detector known in state-of-the-art.
- Ground Deformation Data - the Interferometric Synthetic Aperture Radar (InSAR) technique is already used to measure surface displacements. Employing a method known as "interferometry", InSAR operates by comparing satellite images of the same location in time. In practice, data is harmonized to gauge the coseismic surface displacement - the alterations on the ground - that transpire between these acquisitions. The outcome is an interferogram, a visual representation exhibiting a vibrant interference pattern characterized by fringes, which grants the capacity to decipher minute changes in the Earth's topography. This technique allows the generation of comprehensive maps detailing pixel offsets. Such maps play a pivotal role in accurately locating surface ruptures resulting from earthquakes and quantifying surface slip. With a committed goal, the utilization of InSAR observations strives for millimeter-level accuracy in gauging detailed displacements. The ground deformation channel may also include data taken via any GNSS sensor.

- Thermal Imaging Data - satellite thermal remote sensing has emerged as a compelling avenue for detecting potential seismic activity precursors through the observation of pre-earthquake thermal infrared (TIR) anomalies in land surface temperatures within and surrounding epicentral regions. A remote sensing-based thermal technique will be harnessed to identify a dependable indicator of impending earthquakes, grounded in the principle that stress accumulation within rocks in tectonically active zones can translate into temperature fluctuations via energy conversion processes. This approach capitalizes on the concept that a rise in land surface temperature (LST) may precede an oncoming earthquake. The analysis of that phenomenon shows thermal elevation in LST, spanning from 2° to 12° Celsius, in the vicinity of epicentral areas for diverse earthquakes. These pre-earthquake thermal anomalies typically exhibited an onset period of 1 to 10 days before the main event, contingent upon the earthquake's magnitude and focal depth. Significantly, these thermal anomalies vanish just before the primary seismic shock occurs.
- Ionospheric Disturbances - the ionosphere, a layer of Earth's atmosphere located approximately 50 to 1000 kilometers above the Earth's surface, contains charged particles that various geophysical phenomena, including earthquakes, can influence. Therefore, ionospheric disturbances could serve as indicators of impending seismic activity. The concept behind ionospheric disturbances as earthquake precursors is based on the idea that the stress buildup along faults before an earthquake can lead to the release of various types of energy, including electromagnetic energy. This energy can interact with the ionosphere and create disturbances that can be detected through ground-based and satellite-based measurements. Several phenomena have been observed in the ionosphere before earthquakes, including Total Electron Content (TEC) Anomalies; TEC refers to the number of free electrons in a column of the ionosphere. Anomalies in TEC have been reported to occur before earthquakes, possibly due to the generation of electric charges along geological faults. These anomalies can be monitored using ground-based GPS receivers and satellite observations. Ionospheric Total Electron Content (ITEC) Variations: ITEC variations involve changes in the ionospheric electron density and plasma density before seismic events. These variations might be related to the release of radon gas from the Earth's crust, which can ionize the atmosphere and cause ionospheric disturbances. Before an earthquake, the tectonic plates' stress buildup will generate acoustic and gravity waves that propagate through the atmosphere and ionosphere. These waves lead to fluctuations in electron density, temperature, and other ionospheric parameters. VLF/LF Radio Signal Anomalies: Very Low Frequency (VLF) and Low Frequency (LF) radio signals can be influenced by ionospheric changes caused by seismic activity. Unusual signal variations have been reported before some earthquakes, possibly due to the interactions between the ionosphere and ground-based electric fields generated by stress in the Earth's crust.

- Radon Concentration - radon is a colorless, odorless, and tasteless radioactive gas that occurs naturally as a decay product of uranium in the Earth's crust. It tends to migrate through soil and rock and can seep into buildings. Changes in radon gas concentrations in soil and groundwater might occur before an earthquake due to the movement of tectonic plates and the build-up of stress along faults. As the Earth's crust undergoes stress prior to an earthquake, it might release some of the trapped radon gas into the surrounding environment. Therefore, observing changes in radon concentrations might provide insights into the geological and tectonic processes occurring beneath the Earth's surface. However, the use of radon gas concentrations as a reliable earthquake precursor is still a subject of active research.
- Gravity Data - Gravity Data measures minute changes in the Earth's gravitational field. These changes can result from mass redistributions caused by tectonic movements and stress accumulations, making it a valuable indicator of seismic activity. Data could be sourced from Gravimetric sensors and satellite missions like the Gravity Recovery and Climate Experiment (GRACE).
- Atmospheric Pressure Variations - Variations in atmospheric pressure can occur due to tectonic activity and stress release. These pressure changes can be detected through ground-based sensors, providing additional data for earthquake prediction models. Data could be sourced from ground-based barometers and atmospheric sensors.
- Seismic Activity Data - These data includes recordings of ground motion from seismic waves. Seismic activity data is fundamental in detecting and analyzing earthquakes, including foreshocks and aftershocks, which can provide vital information about potential upcoming seismic events. Data could be sourced from seismometers and accelerometers.
- Total Electron Content (TEC) - TEC data measures the number of free electrons in the ionosphere, which can be influenced by seismic activity. Variations in TEC can indicate electromagnetic disturbances associated with tectonic stress and fault movements. Data could be sourced from GPS receivers and ionospheric monitoring satellites.
- Solar Activity Data - Solar activity, such as solar flares and coronal mass ejections (CMEs), can affect the Earth's magnetosphere and ionosphere. Monitoring solar activity provides context for understanding ionospheric disturbances that might be related to seismic events. Data could be sourced from solar monitoring observatories and satellites.

Next, one transfers the collected historical data set into the integrated AI and forecast module 3 and trains the integrated AI and forecast module 3 based on the collected historical data set, using supervised training method, creating a trained model for the particular location. In particular one trains separate autoencoder 4 for each data channel 2 to extract crucial information from the input data and detect anomalies, then trains a predictor 5 using both output of the encoder part of the autoencoders 4 (known as compressed representation) and anomaly-related features based on the autoencoders' 4 individual reconstruction errors (interpreted as anomaly scores) as inputs to the model. Thanks to the combination of these three activities one creates a unique feature vector for each timestamp. Individual reconstruction errors regarding in the training mode are single pixel in an image and a single numerical value in a time series. The timestamp in the training mode represents a time of an image acquisition or a last time value in a time series input. In the last step one defines an earthquake detection task as a binary classification task, in which binary label answers the question, "Will an earthquake of magnitude within range (Mmin, Mmax) occur in area A within the next N days/in N days?". One combines the per-channel probability scores into a single probability score using a weighted geometric mean method. In the working mode, one collects input data of Cosmic Ray Data type, Ground Deformation Data type, Thermal Imaging Data type, Ionospheric Disturbances data type, Radon Concentration data type, Gravity Data type, Atmospheric Pressure Variations data type, Seismic Activity Data type, Total Electron Content (TEC) data type, Solar Activity Data type, which are useful for earthquake (the same types, which were used for training of the trained model for the particular location). Then, one transfers the data into the trained integrated AI and forecast module 3, processes data using the trained integrated AI and forecast module 3, and predicts or forecasts earthquake events in the defined time period using predictor 5 and the defined earthquake detection task. One generates numerous parameter sets using the parameter sweeper 7 and uses these parameter sets as additional input for the predictor 5. The separate models are trained and used for different geographic locations. During the work of the model, one further calibrates the integrated AI and forecast module 3 in the working mode in order to transform probability scores into precise likelihood estimations by aligning the probability score with the actual proportion of positive labels using methods well-known in state-of-the-art. In the second execution example of the method according to the invention one combines ten data channels 2. Moreover in the training mode and in the working mode one preprocesses the data with channel-specific method - division by moving average - using the data preprocessing module 6.

## Claims

1. A system for earthquake predictions and forecasts **characterized in that** the system comprises a data collection module (1), where the data collection module (1) contains at least one data channel (2) and the system comprises further an integrated AI and forecast module (3), where the integrated AI and forecast module (3) contains at least one autoencoder (4) and a predictor (5), while the number of the autoencoders (4) corresponds to the number of the data channels (2) and each data channel (2) is connected with one autoencoder (4) and each autoencoder (4) has a channel-specific architecture, wherein the data collection module (1) is configured to collect at least one type of data in the at least one data channel (2) and the integrated AI and forecast module (3) is configured to process and analyze data from the at least one data channel (2) to predict or forecast seismic activities.

2. The system, according to claim 1, **wherein** the data collection module (1) contains a data preprocessing module (6), and the data preprocessing module (6) is configured to preprocess data using channel-specific methods known in state-of-the-art.

3. The system, according to claim 1 or 2, **wherein** the integrated AI and forecast module contains a parameter sweeper (7), and the parameter sweeper (7) is placed on the input to the predictor (5), and the parameter sweeper (7) is configured to generate at least one additional parameter set.

4. A method for earthquake predictions and forecasts **characterized in that** the method is conducted in the system according to claim 1, wherein the method is divided into two main modes - a training mode and a working mode, wherein in the training mode one collects at least one type of historical input data of any type useful for earthquake prediction known in state-of-the-art, for a particular location and for a particular time period, in which time period, at least one earthquake event took place, using the at least one data channel (2) in the data collection module (1), and next, one transfers the collected historical data set into the integrated AI and forecast module (3) and trains the integrated AI and forecast module (3) based on the collected historical data set, using training methods known in state-of-the-art, creating a trained model for the particular location, in particular one trains separate autoencoder (4) for each data channel (2) to extract crucial information from the input data and detect anomalies, then trains a predictor (5) using both output of the encoder part of the autoencoder (4) (known as compressed representation) and anomaly-related features based on the autoencoder's (4) individual reconstruction errors (interpreted as anomaly scores) as inputs to the model, and thanks to the combination of these three activities one creates a unique feature vector for each timestamp and in the last step one defines an earthquake detection task, which is a classification task of a type well-known in state-of-the-art, wherein in the working mode, one collects at least one type of input data of any type useful for earthquake prediction known in state-of-the-art (the same type, which was used for training of the trained model for particular location) and then one transfers the data into the trained integrated AI and forecast module (3), process data using the trained integrated AI and forecast module (3) and one predicts or forecasts earthquake event in the defined time period using predictor (5) and the defined earthquake detection task, while the separate models are trained and used for different geographic location.

5. The method, according to claim 4, **wherein** one selects input data arbitrarily from the data types set:
- Cosmic Ray Data,
- Ground Deformation Data,
- Thermal Imaging Data,
- Ionospheric Disturbances,
- Radon Concentration,
- Gravity Data,
- Atmospheric Pressure Variations,
- Seismic Activity Data,
- Total Electron Content (TEC),
- Solar Activity Data

6. The method, according to claim 4 or 5, **wherein** one uses each data channel (2) separately.

7. The method, according to claim 4 or 5, **wherein** one combines multiple data channels (2).

8. The method, according to any one of claims from 4 to 7, **wherein** individual reconstruction errors regarding in the training mode are based on a single pixel in an image or a single numerical value in a time series.

9. The method, according to any one of claims from 4 to 8, **wherein** the timestamp in the training mode represents a time of an image acquisition or a last time value in a time series input.

10. The method, according to any one of claims from 4 to 9, **wherein** in the training mode or in the working mode one preprocesses the data with channel-specific methods known in state-of-the-art using the data preprocessing module (6), where examples of methods are division by moving average, standard scaling, or removing extreme outliers.

11. The method, according to any one of claims from 4 to 10, **wherein** one generates numerous parameter sets using the parameter sweeper (7) and uses these parameter sets as additional input for the predictor (5).

12. The method, according to any one of claims from 4 to 11, **wherein** one combines the per-channel probability scores into a single probability score using a weighted geometric mean method.

13. The method, according to any one of claims from 4 to 12, **wherein** one calibrates the integrated AI and forecast module (3) in the working mode in order to transform probability scores into precise likelihood estimations by aligning the probability score with the actual proportion of positive labels using methods well-known in state-of-the-art.

14. The method, according to any one of claims from 4 to 13, **wherein** one defines the earthquake detection task as a binary classification task, in which a binary label answers the question, "Will an earthquake of magnitude within range (Mmin, Mmax) occur in area A within the next N days/in N days?"
